# EUROPEAN PATENT SPECIFICATION

(11) **EP 3 000 677 B1**
(45) Date of publication and mention of the grant of the patent: **31.05.2017**
(21) Application number: 15186412.1
(22) Date of filing: 23.09.2015
(51) Int. Cl.: B60T 17/02, B60T 13/52

(54) **VEHICLE BRAKE SYSTEM**
BREMSSYSTEM FÜR EIN FAHRZEUG
SYSTEME DE FREINAGE POUR VEHICULE

(30) Priority: 29.09.2014 JP 2014199120
(43) Date of publication of application: 30.03.2016
(73) Proprietor: Honda Motor Co., Ltd., Tokyo 107-8556 (JP)
(72) Inventor: HORII, Eisuke, Saitama 351-0193 (JP); KITAMURA, Jungo, Saitama 351-0193 (JP); OHSAKI, Seiji, Saitama 351-0193 (JP); KANBE, Katsuhito, Saitama 351-0193 (JP); SATOU, Takumi, Saitama 351-0193 (JP); SATO, Shinji, Saitama 351-0193 (JP)
(74) Representative: Herzog, Markus

(56) References cited:
- WO-A1-2013/004601
- WO-A1-2013/072103
- JP-A- H09 177 678

## Description

### BACKGROUND OF THE INVENTION

### Field of the Invention

The invention relates to a vehicle brake system.

### Description of the Related Arts

A vehicle brake system has been widely used which uses a negative pressure booster to boost brake operation force inputted via a brake operation mechanism such as a brake pedal. Further, a configuration has been known well, in which negative pressure is supplied to the negative pressure booster by a negative pressure generating device such as a negative pressure pump.

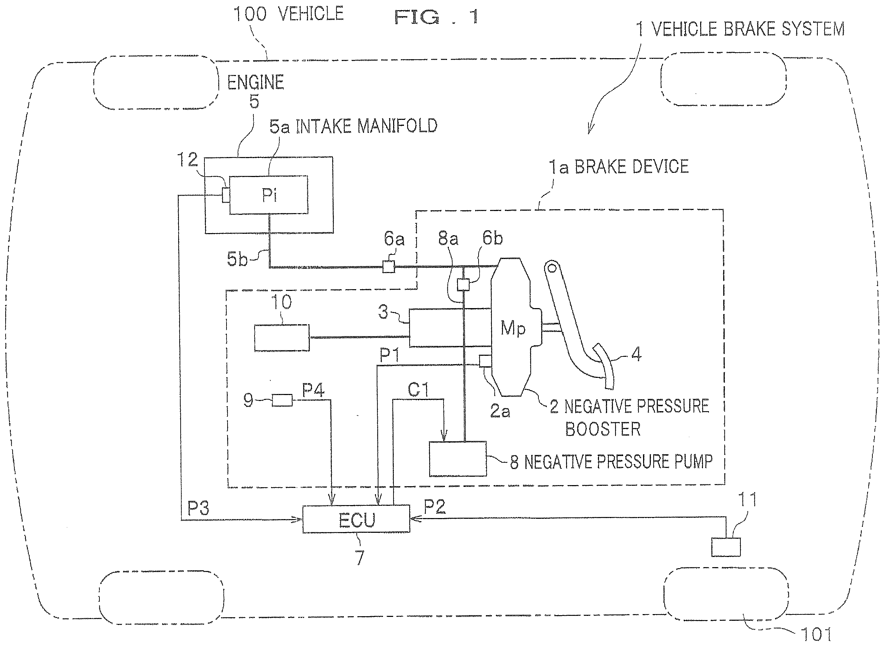

WO 2013/004601 A1 discloses a vehicle brake system installed in a vehicle comprising: an atmospheric pressure detecting device that detects atmospheric pressure to output a detected signal of atmospheric pressure; a negative pressure booster that uses negative pressure to boost a brake operation force inputted via a brake operation mechanism; a vacuum pump that supplied the negative pressure to the negative pressure booster; a booster pressure detecting device that detects booster pressure generated in the negative pressure booster to output a detected signal of booster pressure; an activation determining unit that compares a predetermined activation threshold value to be set to have larger negative pressure as the atmospheric pressure increases with a determination value calculated based on the detected signal of booster pressure to determine activation of the negative pressure generating device; and a deactivation determining unit that compares a predetermined deactivation threshold value to be set to have larger negative pressure as the atmospheric pressure increases with the determination value to determine deactivation of the vacuum pump. The vacuum pump is activated according to a percentage of maximum available vacuum with reference to atmospheric pressure (figure 1, characteristic line F). This characteristic line F converges slightly to the pump deactivation line E as the altitude increases.

Japanese Patent Application Publication No. H09-177678 discloses a method of controlling a negative pressure pump (negative pressure generating device) that supplies negative pressure to a negative pressure booster. The negative pressure pump is controlled based on relative pressure between atmospheric pressure that is detected by an atmospheric pressure sensor (atmospheric pressure detecting device) and absolute pressure in a tank that is detected by a negative pressure sensor as an absolute pressure sensor (booster pressure detecting device that detects negative pressure of the negative pressure booster). Thus, activation/deactivation of the negative pressure pump is controlled based on a change the atmospheric pressure.

### SUMMARY OF THE INVENTION

In the control method described in Japanese Patent Application Publication No. H09-177678, when the atmospheric pressure sensor is out of order and does not function properly, the negative pressure pump may not be controlled optimally.

For example, when a detected value of the atmospheric pressure sensor becomes larger than actual atmospheric pressure, the relative pressure is determined to be lower. Therefore, even if the negative pressure pump needs to be driven, the negative pressure pump is not driven. On the other hand, when the detec-ted value of the atmospheric pressure sensor becomes smaller than the actual atmospheric pressure, the relative pressure is determined to be higher. Therefore, even if the negative pressure pump can be deactivated, the negative pressure pump is not deactivated.

Thus, if the atmospheric pressure sensor is broken, the negative pressure pump is not operated optimally. If the negative pressure pump is not operated optimally, the brake operation force cannot be boosted effectively when a driver depresses the brake pedal.

In view of the problem mentioned above, the present invention intends to provide a vehicle brake system, inclusive of a negative pressure generating device that is controlled based on atmospheric pressure detected by an atmospheric pressure detecting device, that can reduce negative effects due to a failure of the atmospheric pressure detecting device.

To solve the problem mentioned above, the present invention provides a vehicle brake system installed in a vehicle in accordance with claim 1.

The vehicle brake system includes an atmospheric pressure detecting device that detects atmospheric pressure to output a detected signal of atmospheric pressure; a negative pressure booster that uses negative pressure to boost a brake operation force inputted via a brake operation mechanism; a negative pressure generating device that supplies the negative pressure to the negative pressure booster; a booster pressure detecting device that detects booster pressure generated in the negative pressure booster to output a detected signal of booster pressure; an activation determining unit that compares a predetermined activation threshold value to be set to have
larger negative pressure as the atmospheric pressure increases with a determination value calculated based on the detected signal of booster pressure to determine activation of the negative pressure generating device; and a deactivation determining unit that compares a predetermined deactivation threshold value to be set to have larger negative pressure as the atmospheric pressure increases with the determination value to determine deactivation of the negative pressure generating device, wherein the activation threshold value is set to have maximum negative pressure of activation which negative pressure is associated with a predetermined high-pressure boundary value of the atmospheric pressure, and the deactivation threshold value is set to have minimum negative pressure of deactivation which negative pressure is associated with a predetermined low-pressure boundary value of the atmospheric pressure.

According to the present invention, the activation threshold value used for determining the activation of the negative pressure generating device is set to the maximum negative pressure (maximum negative pressure of activation) associated with the high-pressure boundary value of the atmospheric pressure. Further, the deactivation threshold value used for determining the deactivation of the negative pressure generating device is set to the minimum negative pressure (minimum negative pressure of deactivation) associated with the low-pressure boundary value at a low pressure side of the atmospheric pressure. By setting the activation threshold value to the maximum negative pressure of activation, the negative pressure generating device is hard to be activated under a condition having high atmospheric pressure, thereby restraining a disadvantage such that the negative pressure generating device is activated when unnecessary. Further, by setting the deactivation threshold value to the minimum negative pressure of deactivation, the negative pressure generating device is hard to be deactivated under a condition having low atmospheric pressure, thereby restraining a disadvantage such that the negative pressure generating device is deactivated when the negative pressure generating device needs to be activated.

Further, the atmospheric pressure detecting device and the booster pressure detecting device according to the present invention are sensors that detect absolute pressure, and the vehicle brake system further includes a calculating unit for relative pressure that calculates a value of booster pressure based on the detected signal of booster pressure, calculates a value of atmospheric pressure based on the detected signal of atmospheric pressure, and subtracts the calculated value of atmospheric pressure from the calculated value of booster pressure to calculate relative pressure of the calculated value of the booster pressure, wherein the activation determining unit determines the activation of the negative pressure generating device based on the relative pressure as the determination value, and the deactivation determining unit determines the deactivation of the negative pressure generating device based on the relative pressure as the determination value.

According to the present invention, the calculating unit for relative pressure is included which subtracts the calculated value of atmospheric pressure indicative of absolute pressure from the calculated booster pressure value indicative of absolute pressure to calculate the relative pressure. The activation determining unit determines the activation of the negative pressure generating device based on the relative pressure calculated by the calculating unit for relative pressure as the determination value, and the deactivation determining unit determines the the deactivation of the negative pressure generating device based on the relative pressure calculated by the calculating unit for relative pressure as the determination value. The calculating unit for relative pressure can calculate the relative pressure precisely, to allow the negative pressure generating device to be controlled more optimally than a conventional system.

Still further, the activation determining unit according to the present invention determines to activate the negative pressure generating device when the relative pressure has negative pressure smaller than the activation threshold value, and the deactivation determining unit determines to deactivate the negative pressure generating device when the relative pressure has negative pressure larger than the deactivation threshold value.

According to the present invention, the negative pressure generating device is activated when the relative pressure has negative pressure smaller than the activation threshold value, and the negative pressure generating device is deactivated when the relative pressure has negative pressure larger than the activation threshold value. Thus, the relative pressure can be maintained optimally.

Yet further, the calculating unit for relative pressure according to the present invention calculates the relative pressure by subtracting a predetermined upper limit value from the calculated value of booster pressure when the calculated value of atmospheric pressure is greater than or equal to the upper limit value, and calculates the relative pressure by subtracting a predetermined lower limit value from the calculated value of booster pressure when the calculated value of atmospheric pressure is less than or equal to the lower limit value.

According to the present invention, the calculated value of atmospheric pressure is confined from the upper limit value to the lower limit value. Therefore, even if the atmospheric pressure detecting device is out of order, the calculated value of atmospheric pressure is not larger than the upper limit value. In addition, the calculated value of atmospheric pressure is not smaller than the lower limit value. For example, if the calculated value of atmospheric pressure becomes larger than the upper limit value or smaller than the lower limit value after the atmospheric pressure detecting device is out of order, an error between the calculated value of atmospheric pressure and an actual atmospheric pressure becomes smaller. Accordingly, the negative pressure generating device can be controlled as optimally as possible even if the atmospheric pressure detecting device fails. Thus, negative effects due to the failure of the atmospheric pressure detecting device can be reduced.

Moreover, in the present invention, the upper limit value is set based on the lowest altitude where the vehicle travels and the lower limit value is set based on the highest altitude where the vehicle travels.

According to the present invention, the negative pressure generating device is controlled based of the upper limit value and the lower limit value which are set based on the altitude where the vehicle travels. Therefore, the negative pressure generating device is controlled optimally according to a condition in which the vehicle travels.

According to the present invention, in the vehicle brake system, inclusive of the negative pressure generating device which is controlled based on the atmospheric pressure detected by the atmospheric pressure detecting device, can reduce negative effects due to the failure of the atmospheric pressure detecting device.

### BRIEF DESCRIPTION OF THE DRAWINGS

FIG. 1 is a diagram showing a vehicle brake system;
FIG. 2 is a cross sectional view of a negative pressure booster;
FIG. 3 is a functional block diagram of an ECU;
FIG. 4A is a chart showing an example of a threshold value map for activation used for determining to activate a negative pressure pump;
FIG. 4B is a chart showing an example of a threshold value map for deactivation used for determining to deactivate the negative pressure pump;
FIG. 5A is a chart showing a state where a detected value of an atmospheric pressure sensor produces an error at a higher pressure;
FIG. 5B is a chart showing a state where the detected value of the atmospheric pressure sensor produces the error at a lower pressure;
FIG. 6A is a chart showing an upper limit value for calculated atmospheric pressure value; and
FIG. 6B is a chart showing a lower limit value for calculated atmospheric pressure value.

### DETAILED DESCRIPTION OF THE PREFERRED EMBODIMENTS

An embodiment of the present invention will be appropriately described in detail with reference to accompanying drawings.

It should be noted that, in the description below, "negative pressure" indicates pressure more in vacuum than in atmospheric pressure Pₐᵢᵣ, that is, negative pressure in gauge pressure, and negative pressure in a state equivalent to the atmospheric pressure Pₐᵢᵣ is made to zero. Negative pressure closer to the atmospheric pressure Pₐᵢᵣ, that is, the negative pressure closer to zero is denoted as "low negative pressure" and negative pressure closer to vacuum is denoted as "high negative pressure".

Further, when a specific numeric value of the pressure is indicated, a numeric value is indicated with the unit of "hPa (hectopascal)" and a numeric value is added with the unit of "mmHg (a millimeter of a mercurial column)" in parentheses as a reference value.

FIG. 1 is a diagram showing a vehicle brake system. As shown in FIG. 1, a vehicle 100 includes a vehicle brake system 1 according to the present embodiment. The vehicle brake system 1 includes a brake device 1a and is controlled by a controller (ECU 7).

The brake device 1a is formed to include a brake operation mechanism (brake pedal 4), a negative pressure booster 2 and a master cylinder 3. The brake pedal 4 is a brake operation section which a driver depresses. The negative pressure booster 2 uses negative pressure for boosting force (brake operation force) exerted on the brake pedal 4 by the driver to input the force to the master cylinder 3. The master cylinder 3 converts the brake operation force boosted by the negative pressure booster 2 to oil pressure to input the pressure to an oil pressure system 10. A drive section (such as disk brakes), not shown, is connected to the oil pressure system 10. The drive section is driven by the oil pressure that is inputted to the oil pressure system 10. It should be noted that the negative booster 2 and the the master cylinder 3 may be formed in one unit.

The negative pressure booster 2 communicates via a pipe 5b with an intake manifold (intake pipe) 5a that forms an intake portion of an engine 5. The negative pressure booster 2 is supplied with negative pressure generated in the intake manifold 5a (hereinafter, referred to as intake manifold pressure Pᵢ), and pressure in the negative pressure booster 2 (hereinafter, referred to as master power pressure Mp) is maintained in negative pressure. The negative pressure booster 2 includes a negative pressure detecting device (master power pressure sensor 2a).

The master power pressure sensor 2a detects the master power pressure Mp to output the detected value as a detected signal (detected Signal of booster pressure P1). In the present embodiment, the master power pressure sensor 2a is a sensor for detecting absolute pressure. The detected signal of booster pressure P1 is inputted to the ECU 7. The ECU 7 calculates a value of master power pressure Mp (calculated value of booster pressure Mp0) based on the detected signal of booster pressure P1.

The pipe 5b includes a first check valve 6a as a one-way valve. If the master power pressure Mp in the negative pressure booster 2 is lower than the negative pressure (intake manifold pressure Pᵢ) generated in the intake manifold 5a, the first check valve 6a is closed to maintain the master power pressure Mp to be lower than the intake manifold pressure Pᵢ. On the other hand, if the master power pressure Mp is higher than the intake manifold pressure Pᵢ, the first check valve 6a opens to reduce the master power pressure Mp so as to be at the same level as the intake manifold pressure Pᵢ. Since the first check valve 6a that functions like this is arranged, the master power pressure Mp is maintained in negative pressure that is lower than or equal to the intake manifold pressure Pᵢ in the negative pressure booster 2.

Accordingly, the negative pressure booster 2 uses the master power pressure Mp (negative pressure) for boosting the brake operation force when the driver operates the brake pedal 4 to input the force to the master cylinder 3.

The brake device 1a includes a negative pressure generating device (negative pressure pump 8) that supplies negative pressure to the negative pressure booster 2. The negative pressure pump 8 is connected to the pipe 5b via a pipe 8a. The pipe 8a is connected to the pipe 5b at a point between the first check valve 6a and the negative pressure booster 2. The negative pressure pump 8 is controlled by a control signal C1 inputted from the ECU 7.

The pipe 8a includes a second check valve 6b. When the negative pressure pump 8 is driven, the second check valve 6b is opened by the negative pressure generated in the negative pressure pump 8. Then, air in the negative pressure booster 2 is evacuated and the negative pressure is supplied to the negative pressure booster 2. It should be noted that, when the negative pressure pump 8 is not driven, the second check valve 6b is closed to maintain negative pressure in the negative pressure booster 2.

Further, the brake device 1a includes an atmospheric pressure detecting device (atmospheric pressure sensor 9). The atmospheric pressure sensor 9 detects the atmospheric pressure Pₐᵢᵣ to output the detected value as a detected signal P4 of atmospheric pressure. The detected signal P4 of atmospheric pressure is inputted to the ECU 7. In the present embodiment, the atmospheric pressure sensor 9 is a sensor that detects absolute pressure.

The ECU 7 is connected with a vehicle speed sensor 11. The vehicle speed sensor 11 detects a vehicle speed of the vehicle 100 to output the detected value as a vehicle speed signal P2. The vehicle speed sensor 11 is, for example, a wheel speed sensor that detects the rotational speed (wheel speed) of a wheel 101. The vehicle speed signal P2 outputted from the speed sensor 11 is inputted to the ECU 7. The ECU 7 calculates the vehicle speed (vehicle body speed) of the vehicle 100 based on the speed signal P2.

Further, the ECU 7 is inputted with an engine drive signal P3 from an engine controller (engine ECU 12). The engine drive signal P3 is a signal that is turned ON when the engine 5 is being driven. The ECU 7 determines if the engine 5 is being driven based on the engine drive signal P3.

The ECU 7 is configured to have a computer including a CPU (Central Processing Unit), a RAM (Random Access Memory), a ROM (Read Only Memory) and the like, and a peripheral circuits and the like (not shown). The CPU executes programs stored in the ROM to control the engine 5 and maintains the master power pressure Mp in the negative pressure booster 2 in appropriate negative pressure.

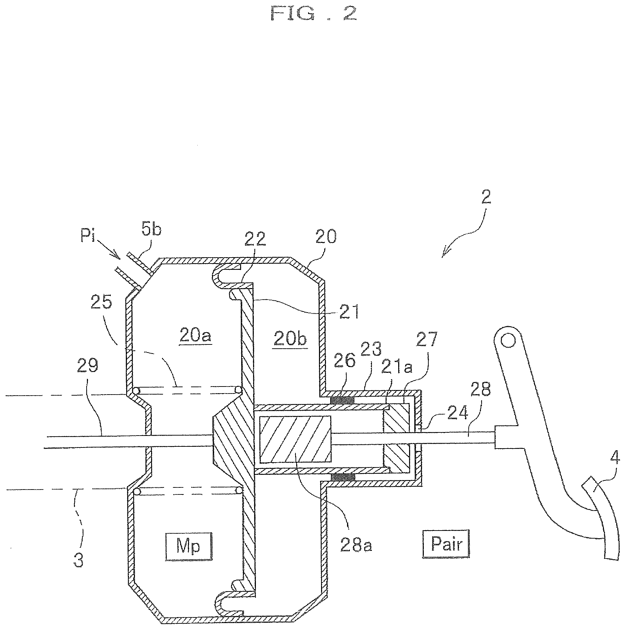

FIG. 2 is a cross sectional view of the negative pressure booster.

As shown in FIG. 2, the negative pressure booster 2 includes a hollow housing 20. The housing 20 has, for example, a thin and circular disk shape at a front, and a booster piston 21 divides an inside of the housing 20 into two chambers in a thickness direction. The booster piston 21 is, for example, reciprocatably attached to the housing 20 via a diaphragm 22.

One of the chambers formed by the booster piston 21 dividing the housing 20 communicates with the intake manifold 5a (see FIG. 1) in the engine 5 via the pipe 5b. The chamber is supplied with the intake manifold pressure Pᵢ to be maintained in negative pressure and forms a negative pressure chamber 20a.

The other chamber adjacent to the negative pressure chamber 20a via the booster piston 21 forms an operation chamber 20b. The operation chamber 20b includes an extended cylinder portion 23 formed by a disk-like central portion of the housing 20 which projects in a cylindrical shape. An atmospheric air inlet 24 is formed at an end of the extended cylinder portion 23.

The booster piston 21 is biased toward the operation chamber 20b by a return spring 25.

A cylinder 21a is formed at a central portion of the booster piston 21, the cylinder 21a being slidably supported inside the extended cylinder portion 23 via a seal member 26. An end of the cylinder 21a is ope-ended to be closed by a filter 27 that purifies air introduced from the atmospheric air inlet 24.

An input rod 28 that is connected to the brake pedal 4 penetrates the filter 27 to be inserted in the cylinder 21a. The input rod 28 is connected with an air valve 28a installed inside the cylinder 21a.

The booster piston 21 includes an output rod 29. The output rod 29 projects toward the negative pressure chamber 20a. The output rod 29 reciprocates with the booster piston 21 integrally. The output rod 29 is arranged to penetrate the negative pressure chamber 20a. An end of the output rod 29 is, for example, connected with the master cylinder 3 that is formed with the negative pressure booster 2 in one unit.

The air valve 28a moves together with the input rod 28 and allows/disallows communication between the negative pressure chamber 20a and the operation chamber 20b, as well as communication between the operation chamber 20b and the atmospheric air inlet 24.

When the brake pedal 4 is not operated by the driver to be in a non-operated state, the air valve 28a maintains a state in which the operation chamber 20b and the atmospheric air inlet 24 are disallowed to communicate with each other and so are the negative pressure chamber 20a and the operation chamber 20b.

When the driver depresses the brake pedal 4, the input rod 28 is operated toward the negative pressure chamber 20a to push the booster piston 21 toward the negative pressure chamber 20a. This operation activates the air valve 28a to disallow the communication between the negative pressure chamber 20a and the operation chamber 20b as well as to allow the operation chamber 20b and the atmospheric air inlet 24 to communicate with each other. Atmospheric air is fed from the atmospheric air inlet 24 to the operation chamber 20b, thereby raising pressure in the operation chamber 20b to the atmospheric pressure Pₐᵢᵣ. Then, the booster piston 21 is pulled by negative pressure in the negative pressure chamber 20a so that the booster piston 21 is moved toward the negative pressure chamber 20a. Further, the output rod 29 is moved with the booster piston 21 integrally to be pushed toward the master cylinder 3.

On the other hand, when the driver releases the brake pedal 4, the input rod 28 is moved back toward the operation chamber 20b. This release activates the air valve 28a to disallow communication between the operation chamber 20b and the atmospheric air inlet 24 and to allow communication between the negative pressure chamber 20a and the operation chamber 20b. The atmospheric air fed in the operation chamber 20b is drawn to the intake manifold 5a (see FIG. 1) via the negative pressure chamber 20a and the pipe 5b, causing the operation chamber 20b to have the same negative pressure or the negative pressure chamber 20a. In other words, the negative pressure (intake manifold pressure Pᵢ) is supplied from the intake manifold 5a to the negative pressure chamber 20a and the master power pressure Mp is maintained in the negative pressure.

Thus, the negative pressure booster 2 uses pressure difference between the atmospheric pressure Pₐᵢᵣ and the master power pressure Mp to boost the brake operation force caused by the driver's operation on the brake pedal 4. Therefore, the master power pressure Mp in the negative pressure booster 2 (negative pressure chamber 20a) is required to be lower enough than the atmospheric pressure Pₐᵢᵣ.

The atmospheric pressure Pₐᵢᵣ is lower as the sea level altitude (altitude) is higher. For example, the atmospheric pressure Pₐᵢᵣ (one atmospheric pressure) around 0 m altitude is about 1013 hPa (760 mmHg), while the atmospheric pressure Pₐᵢᵣ around 3000 m altitude decreases to about 700 hPa (525 mmHg).

On the other hand, the intake manifold pressure Pᵢ in the intake manifold 5a (see FIG. 1) of the engine 5 is changed based on the rotational speed, for example, but is not changed based on change in altitude. Therefore, if the vehicle 100 (see FIG. 1) including the brake device 1a (see FIG. 1) travels at higher altitudes, the pressure difference between the atmospheric pressure Pₐᵢᵣ and the master power pressure Mp in the negative pressure booster 2 may decrease. In such a case, the brake operation force by the driver's operation on the brake pedal 4 may not be boosted sufficiently.

The ECU (see FIG. 1) monitors the pressure difference between the atmospheric pressure Pₐᵢᵣ and the master power pressure Mp. Specifically, the ECU 7 calculates the value of the master power pressure Mp (calculated value of booster pressure Mp0) based on the detected signal of booster pressure P1 inputted from the master power pressure sensor 2a (see FIG. 1). Further, the ECU 7 calculates the value of the atmospheric pressure Pₐᵢᵣ (calculated value of the atmospheric pressure Pa0) based on the detected signal of atmospheric pressure P4 inputted from the atmospheric pressure sensor 9 (see FIG. 1). Still further, the ECU 7 calculates the pressure difference (hereinafter, referred to as relative pressure ΔMp) by subtracting the calculated value of atmospheric pressure Pa0 from the calculated value of booster pressure Mp0. The relative pressure ΔMp indicates the calculated value of booster pressure Mp0 relative to the calculated value of the atmospheric pressure Pa0. The ECU 7 drives the negative pressure pump 8 (see FIG. 1) based on the calculated relative pressure ΔMp to optimally maintain the pressure difference between the atmospheric pressure Pₐᵢᵣ and the master power pressure Mp in the negative booster 2.

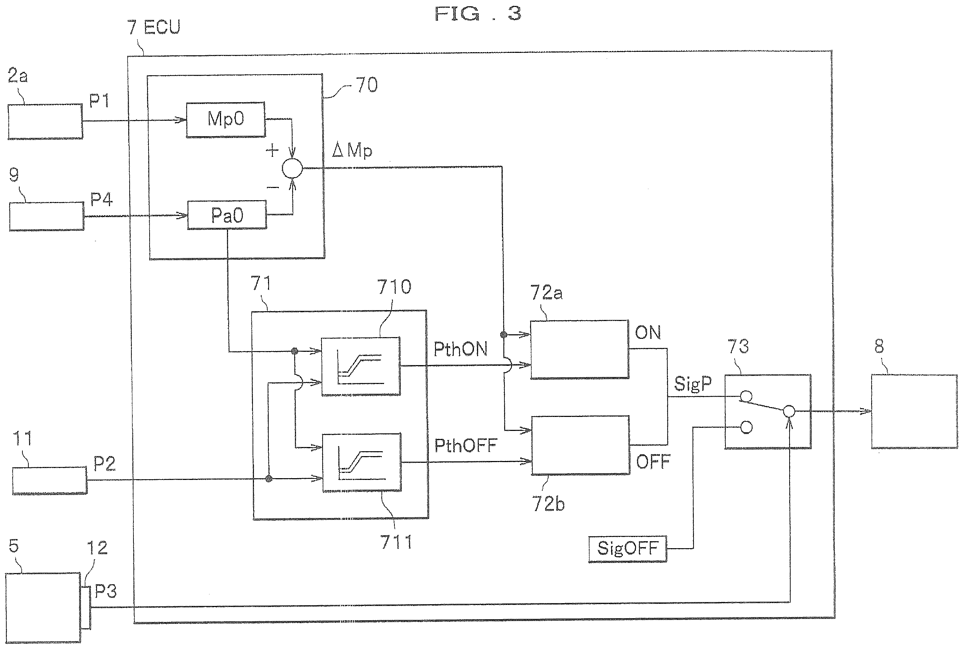

FIG. 3 is a functional block diagram of the ECU 7.

As shown in FIG. 3, the ECU 7 includes a calculating unit for relative pressure 70. The calculating unit for relative pressure 70 receives the detected signal of atmospheric pressure P4 outputted from the atmospheric pressure sensor 9 and the detected signal of booster pressure P1 outputted from the master power pressure sensor 2a. The calculating unit for relative pressure 70 calculates the value of atmospheric pressure Pa0 based on the detected signal of atmospheric pressure P4. Further, the calculating unit for relative pressure 70 calculates the value of booster pressure Mp0 based on the detected signal of booster pressure P1. Still further, the calculating unit for relative pressure 70 calculates the relative pressure ΔMp by subtracting the calculated value of atmospheric pressure Pa0 from the calculated value of booster pressure Mp.

Yet further, the calculating unit for relative pressure 70 sets an upper limit value and a lower limit value (an upper limit value Ulmt and a lower limit value Llmt to be described later) for the calculated value of atmospheric pressure Pa0 when calculating the relative pressure ΔMp.

That is, when the calculated value of atmospheric pressure Pa0 is greater than or equal to the upper limit value Ulmt, the calculating unit for relative pressure 70 calculates the relative pressure ΔMp by subtracting the upper limit value Ulmt from the calculated value of booster pressure Mp0. On the other hand, when the calculated value of atmospheric pressure Pa0 is less than or equal to the lower limit value Llmt, the calculating unit for relative pressure 70 calculates the relative pressure ΔMp by subtracting the lower limit value Llmt from the calculated value of booster pressure Mp0.

Thus, by setting the upper limit value Ulmt and the lower limit value Llmt for the calculated value of atmospheric pressure Pa0, such a failure that the negative pressure pump 8 is not activated or is not deactivated is reduced.

As will be described later in more detail, the upper limit value Ulmt and the lower limit value Llmt are set as characteristic values depending on an environment where the vehicle 100 (see FIG. 1) travels, braking performance required for the vehicle 100 (described later), and the like.

The ECU 7 includes a setting unit for threshold value 71. The setting unit for threshold value 71 receives the vehicle speed signal P2 from the vehicle speed sensor 11. The setting unit for threshold value 71 calculates the vehicle speed (vehicle body speed) based on the vehicle speed signal P2. Further, the setting unit for threshold value 71 receives the calculated value of atmospheric pressure Pa0. Then, the setting unit for threshold value 71 sets a threshold value (activation threshold value PthON) of the relative pressure ΔMp at which the negative pressure pump 8 is activated, and a threshold value (deactivation threshold value PthOFF) of the relative pressure ΔMp, at which the negative pressure pump 8 is deactivated, based on the vehicle speed and the calculated value of atmospheric pressure Pa0.

The setting unit for threshold value 71 sets the activation threshold value PthON based on a threshold value map for activation 710. Further, the setting unit for threshold value 71 sets the deactivation threshold value PthOFF based on a threshold value map for deactivation 711. Details of these maps will be described later.

The ECU 7 includes an activation determining unit 72a and a deactivation determining unit 72b. The activation determining unit 72a receives the activation threshold value PthON and the relative pressure ΔMp. The activation determining unit 72a sets a pump activating signal SigP to be ON when the relative pressure ΔMp is larger than the activation threshold value PthON (when the relative pressure ΔMp is negative pressure smaller than the activation threshold value PthON and is closer to zero).

Thus, the activation determining unit 72a of the present embodiment sets the pump activating signal SigP to be ON based on the relative pressure ΔMp as a determination value. The relative pressure ΔMp as the determination value is a value based on the calculated value of booster pressure Mp0 calculated from the detected signal of booster pressure P1. Therefore, the activation determining unit 72a compares the activation threshold value PthON with the determination value calculated based on the detected signal of booster pressure P1 to determine if the negative pressure pump 8 should be activated.

Further, the deactivation determining unit 72b receives the deactivation threshold value PthOFF and the relative pressure ΔMp. The deactivation determining unit 72b sets the pump activating signal SigP to be OFF when the relative pressure ΔMp is smaller than the deactivation threshold value PthOFF (when the relative pressure ΔMp is negative pressure larger than the deactivation threshold value PthOFF and is farther away from zero).

Thus, the deactivation determining unit 72b of the present embodiment sets the pump activating signal SigP to be OFF based on the relative pressure ΔMp as a determination value. As described above, the relative pressure ΔMp as the determination value is the value based on the detected signal of booster pressure P1. Therefore, the deactivation determining unit 72b compares the deactivation threshold value PthOFF with the determination value calculated based on the detected signal of booster pressure P1 to determine if the negative pressure pump 8 should be deactivated.

The ECU 7 includes an outputting unit for pump activating signal 73. The outputting unit for pump activating signal 73 receives the pump activating signal SigP. Further, the outputting unit for pump activating signal 73 receives the engine drive signal P3 from the engine ECU 12.

When the engine drive signal P3 is ON (when the engine 5 is being driven), the outputting unit for pump activating signal 73 outputs the pump activating signal SigP. Further, when the engine drive signal P3 is OFF (when the engine 5 is stopped), the outputting unit for pump activating signal 73 outputs a pump deactivation signal SigOFF by which the negative pressure pump 8 is deactivated.

The ECU 7 is configured as shown in FIG. 3, and controls the negative pressure pump 8 according to the calculated value of booster pressure Mp0, the calculated value of atmospheric pressure Pa0, the vehicle speed and a state (driving or stopped) of the engine 5. In other words, the ECU 7 determines if the negative pump 8 should be activated or deactivated based on the relative pressure ΔMp as the determination value which is calculated by subtracting the calculated value of the atmospheric pressure Pa0 from the calculated value of booster pressure Mp0.

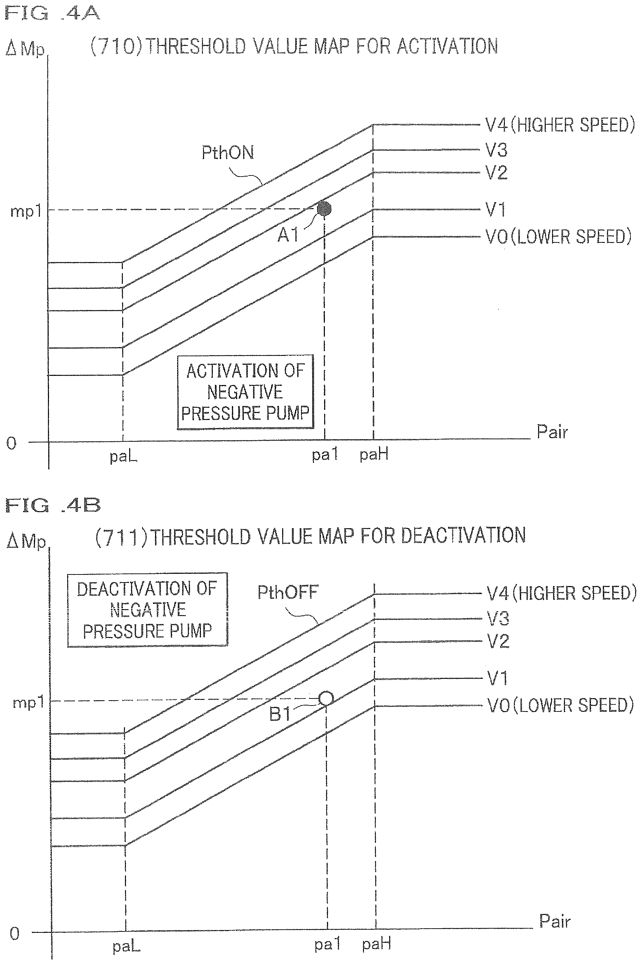

FIG. 4A is a chart showing an example of the threshold value map for activation used for determining if the negative pressure pump should be activated and FIG. 4B is a chart showing an example of the threshold value map for deactivation used for determining if the negative pressure pump should be deactivated.

The threshold value map for activation 710 shown in FIG. 4A and the threshold value map for deactivation 711 shown in FIG. 4B are set in advance as property values of the vehicle brake system 1 (see FIG. 1) to be stored in the ROM (not shown) in the ECU 7 (see FIG. 1).

It should be noted that, in the threshold value map for activation 710 and the threshold value map for deactivation 711, the relative pressure ΔMp on the vertical axis indicates the negative pressure (negative numbers) to have larger negative pressure as the position on the vertical axis becomes higher (as more away from zero). In other words, the higher position on the vertical axis indicates to be more in vacuum to have smaller values.

As shown in FIG. 4A, in the threshold value map for activation 710, the horizontal axis indicates the atmospheric pressure Pₐᵢᵣ (calculated value of atmospheric pressure Pa0) and the vertical axis indicates the relative pressure ΔMp. In the threshold value map for activation 710, threshold values (activation threshold values PthON) of the relative pressure ΔMp to the atmospheric pressure Pₐᵢᵣ are set for each vehicle speed (V0 to V4). As to the vehicle speed, V0 indicates a lower speed and V4 indicates a higher speed. Therefore, the higher the vehicle speed is, the larger negative pressure is set for the activation threshold value PthON.

Further, in the threshold value map for activation 710, for each vehicle speed, the activation threshold value PthON has a maximum value of negative pressure (maximum negative pressure of activation) in a region where the atmospheric pressure Pₐᵢᵣ is greater than or equal to a predetermined high-pressure boundary value "paH", and the activation threshold value PthON has a minimum value of negative pressure in a region where the calculated value of atmospheric pressure Pa0 is less than or equal to a predetermined low-pressure boundary value "paL". Thus, in the threshold value map for activation 710, the activation threshold value PthON is set to have larger negative pressure as the atmospheric pressure Pₐᵢᵣ increases between the high-pressure boundary value "paH" and the low-pressure boundary value "paL". That is, the activation threshold value PthON is set to have the negative pressure for the high-pressure boundary value "paH" of the atmospheric pressure Pₐᵢᵣ as the maximum negative pressure of activation for each vehicle speed.

When the relative pressure ΔMp is smaller negative pressure than the activation threshold value PthON (when the relative pressure ΔMp is closer to zero than the activation threshold value PthON), the activation determining unit 72a (see FIG. 3) in the ECU 7 determines that the negative pressure pump 8 (see FIG. 1) should be activated. Specifically, the activation determining unit 72a sets the pump activating signal SigP to be ON.

Further, as shown in FIG. 4B, in the threshold value map for deactivation 711, the horizontal axis indicates the atmospheric pressure Pₐᵢᵣ (calculated value of atmospheric pressure Pa0) and the vertical axis indicates the relative pressure ΔMp. In the threshold value map for deactivation 711, threshold values (deactivation threshold values PthOFF) of the relative pressure ΔMp to the atmospheric pressure Pₐᵢᵣ are set per vehicle speed (V0 to V4). In the threshold value map for each deactivation 711, the deactivation threshold value PthOFF is set to have larger negative pressure as the vehicle speed increases, and the deactivation threshold value PthOFF is set to have larger negative pressure as the larger atmospheric pressure Pₐᵢᵣ increases.

Also in the threshold value map for deactivation 711, for each vehicle speed, the deactivation threshold value PthOFF has a maximum value of negative pressure in the region where the atmospheric pressure Pₐᵢᵣ is greater than or equal to the high-pressure boundary value "paH", and the deactivation threshold value PthOFF has a minimum value of negative pressure (minimum negative pressure of deactivation) in the region where the calculated value of atmospheric pressure Pa0 is less than or equal to the low-pressure boundary value "paL". Thus, also in the threshold value map for deactivation 711, the deactivation threshold value PthOFF is set to have larger negative pressure as the atmospheric pressure Pₐᵢᵣ increases, between the the high-pressure boundary value "paH" and the low-pressure boundary value "paL". That is, the deactivation threshold value PthOFF is set to have the negative pressure for the low-pressure boundary value "paL" of the atmospheric pressure Pₐᵢᵣ as the minimum negative pressure of deactivation for each vehicle speed.

When the relative pressure ΔMp is larger negative pressure than the deactivation threshold value PthOFF (when the deactivation threshold value PthOFF is closer to zero than the relative pressure ΔMp), the deactivation determining unit 72b (see FIG. 3) in the ECU 7 determines that the negative pressure pump 8 (see FIG. 1) should be deactivated. Specifically, the deactivation determining unit 72b sets the pump activating signal SigP to be OFF.

It should be noted that the high-pressure boundary value "paH" is, for example, set to one atmospheric pressure. Under a situation where the atmospheric pressure Pₐᵢᵣ rises to higher pressure than this level, the negative pressure booster 2 (see FIG. 1) does not need further negative pressure. Therefore, in the threshold value map for activation 710, the activation threshold value PthON has the maximum value of negative pressure (maximum negative pressure of activation) when the atmospheric pressure Pₐᵢᵣ is one atmospheric pressure. Thus, under a situation where the atmospheric pressure Pₐᵢᵣ is higher than the high-pressure boundary value "paH" (for example, one atmospheric pressure), the negative pressure pump 8 (see FIG. 1) is hard to be activated.

Further, the low-pressure boundary value "paL" is set to atmospheric pressure in preset altitude (e.g., 4000 m). If the atmospheric pressure Pₐᵢᵣ further decreases than this atmospheric pressure, the pressure difference between the atmospheric pressure Pₐᵢᵣ in the negative pressure booster 2
and the master power pressure Mp becomes too small. Therefore, in the threshold value map for deactivation 711, when the atmospheric pressure Pₐᵢᵣ is equal to the atmospheric pressure at a predetermined altitude, the deactivation threshold value PthOFF has the minimum value of the negative pressure (minimum negative pressure of deactivation). Thus, under a situation (highland) where the atmospheric pressure Pₐᵢᵣ is lower than the low-pressure boundary value "paL" (for example, the atmospheric pressure at 4000 m), the negative pressure pump 8 is easy to be activated (hard to be deactivated).

For example, an intersection of "pa1" as the calculated value of atmospheric pressure Pa0 and "mp1" as the relative pressure ΔMp is shown with a black circle A1 in FIG. 4A, where the vehicle 100 (see FIG. 1) is traveling with the deactivated negative pressure pump 8 (see FIG. 1). In this case, when the vehicle speed is V2 to V4, the activation determining unit 72a (see FIG. 3) in the ECU 7 determines to activate the negative pressure pump 8 (see FIG. 1) and sets the pump activation signal SigP to be ON. On the other hand, when the vehicle speed is V0 to V1, the activation determining unit 72a in the ECU 7 determines not to activate the negative pressure pump 8 and does not set the pump activation signal SigP to be ON. It should be noted that, when the pump activation signal SigP is not set to be ON, a previous state of the pump activation signal SigP is maintained.

Further, an intersection of "pa1" as the calculated value of atmospheric pressure Pa0 and "mp1" as the relative pressure ΔMp is shown with a white circle B1 in FIG. 4B, in which the vehicle 100 (see FIG. 1) is traveling with the activated negative pressure pump 8. In this case, when the vehicle speed is V0 to V1, the deactivation determining unit 72b (see FIG. 3) in the ECU 7 determines to deactivate the negative pressure pump 8 (see FIG. 1) and sets the pump activation signal SigP to be OFF. On the other hand, when the vehicle speed is V2 to V4, the deactivation determining unit 72b in the ECU 7 determines not to deactivate the negative pressure pump 8 and does not set the pump activation signal SigP to be OFF. It should be noted that, when the pump activation signal SigP is not set to be OFF, a previous state of the pump activation signal SigP is maintained.

Thus, the ECU 7 (activation determining unit 72a, deactivation determining unit 72b) in FIG. 3 sets the pump activation signal SigP to be ON or OFF based on the calculated value of atmospheric pressure Pa0, the calculated value of booster pressure Mp0 and the vehicle speed to control the negative pressure pump 8.

However, if the atmospheric pressure sensor 9 fails, an error between the calculated value of atmospheric pressure Pa0 and the actual atmospheric pressure Pₐᵢᵣ becomes large, the calculated value of atmospheric pressure Pa0 being calculated by the ECU 7 (calculating unit for relative pressure 70) based on the detected signal of atmospheric pressure P4. For example, if the atmospheric pressure sensor 9 fails to have a higher detected value in error, the calculated value of atmospheric pressure Pa0 becomes higher than the actual atmospheric pressure Pₐᵢᵣ.

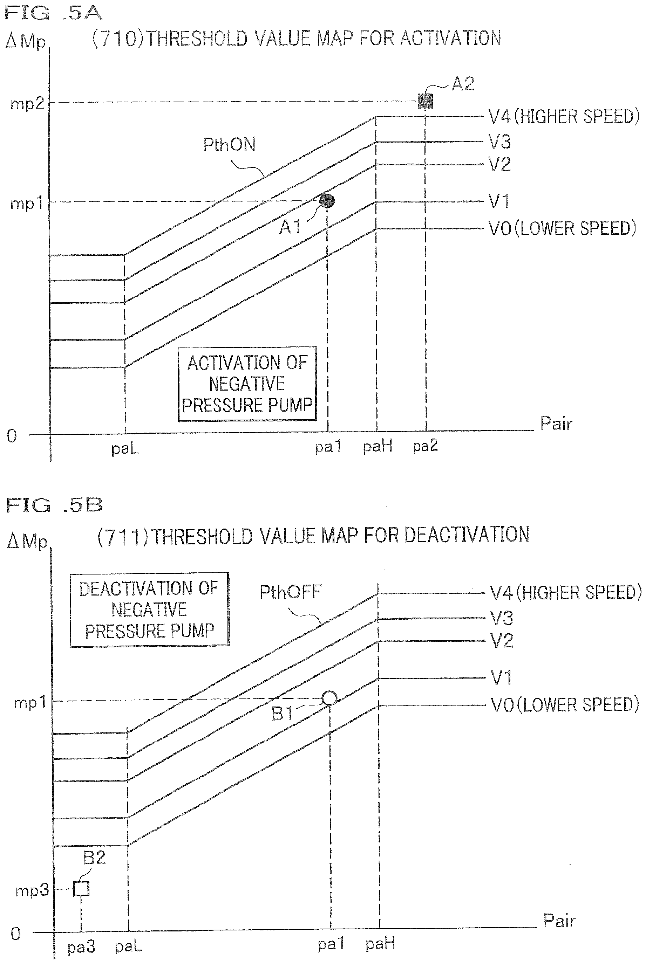

FIG. 5A shows a state in which the detected value of the atmospheric pressure sensor becomes higher in error, and FIG. 5B shows a state in which the detected value of the atmospheric pressure sensor becomes lower in error.

As an example, when the atmospheric pressure Pₐᵢᵣ is "pa1" in a situation where the vehicle 100 (see FIG. 1) is traveling, the relative pressure ΔMp is "mp1", and the vehicle speed is V2 to V4, the negative pressure pump 8 (see FIG. 3) is preferably activated. On the other hand, when the vehicle speed is V0, V1, the negative pressure pump 8 is preferably not activated (shown with the black circle A1 in FIG. 5A).

However, when the atmospheric pressure sensor 9 (see FIG. 3) fails and the calculated value of the atmospheric pressure Pa0 is changed to "pa2" (pa2 > pa1), the relative pressure ΔMp is changed to "mp2 (mp2 < mp1)" (shown in a black square A2 in FIG. 5A).

In this case, even when the vehicle speed is V2 to V4, the activation determining unit 72a (see FIG. 3) in the ECU 7 determines not to activate the negative pressure pump 8 (see

FIG. 3). That is, even when the vehicle 100 travels at the vehicle speed (V2 to V4) at which the negative pressure pump 8 is preferably activated, the negative pressure pump 8 is not activated.

Further, when the atmospheric pressure sensor 9 fails to have lower detected value in error, the calculated value of atmospheric pressure Pa0 becomes lower than the actual atmospheric pressure Pₐᵢᵣ.

As an example, when the atmospheric pressure Pₐᵢᵣ is "pa1" in a situation where the vehicle 100 (see FIG. 1) is traveling with the activated negative pressure pump 8 (see FIG. 3), the relative pressure ΔMp is "mp1", and the vehicle speed is V0, V1, the negative pressure pump 8 is preferably deactivated. On the other hand, when the vehicle speed is V2 to V4, the negative pressure pump 8 is preferably not deactivated (shown with the white circle B1 in FIG. 5B).

However, when the atmospheric pressure sensor 9 fails and the calculated value of atmospheric pressure Pa0 changes to "pa3 (pa3 < pa1)", the relative pressure ΔMp is changed to "mp3 (mp3 > mp1)" (shown with a white square B2 in FIG. 5B).

In this case, even when the vehicle speed is V0, V1, the deactivation determining unit 72b (see FIG. 3) in the ECU 7 determines not to deactivate the negative pressure pump 8 (see FIG. 3). That is, even when the vehicle 100 travels at the vehicle speed (V0, V1) at which the negative pressure pump 8 is preferably deactivated, the negative pressure pump 8 is not deactivated.

When the atmospheric pressure sensor 9 in FIG. 1 fails, the negative pressure pump 8 is not activated and deactivated optimally, as described above.

Then, the ECU 7 of the present embodiment in FIG. 3 is configured to control the negative pressure pump 8 as optimally as possible even when the atmospheric pressure sensor 9 fails. To do this, the calculating unit for relative pressure 70 in the ECU 7 sets limit values (upper limit value Ulmt, lower limit value Llmt) for the calculated value of atmospheric pressure Pa0. When the value of the atmospheric pressure Pa0 calculated based on the detected signal of atmospheric pressure P4, which is inputted from the atmospheric pressure sensor 9, is greater than or equal to the upper limit value Ulmt, the ECU 7 (calculating unit for relative pressure 70) sets the upper limit value Ulmt to the calculated value of atmospheric pressure Pa0. In addition, when the value of atmospheric pressure Pa0 calculated based on the detected signal of atmospheric pressure P4, which is inputted from the atmospheric pressure sensor 9, is less than or equal to the lower limit value Llmt, the ECU 7 (calculating unit for relative pressure 70) sets the lower limit value Llmt to the calculated value of atmospheric pressure Pa0.

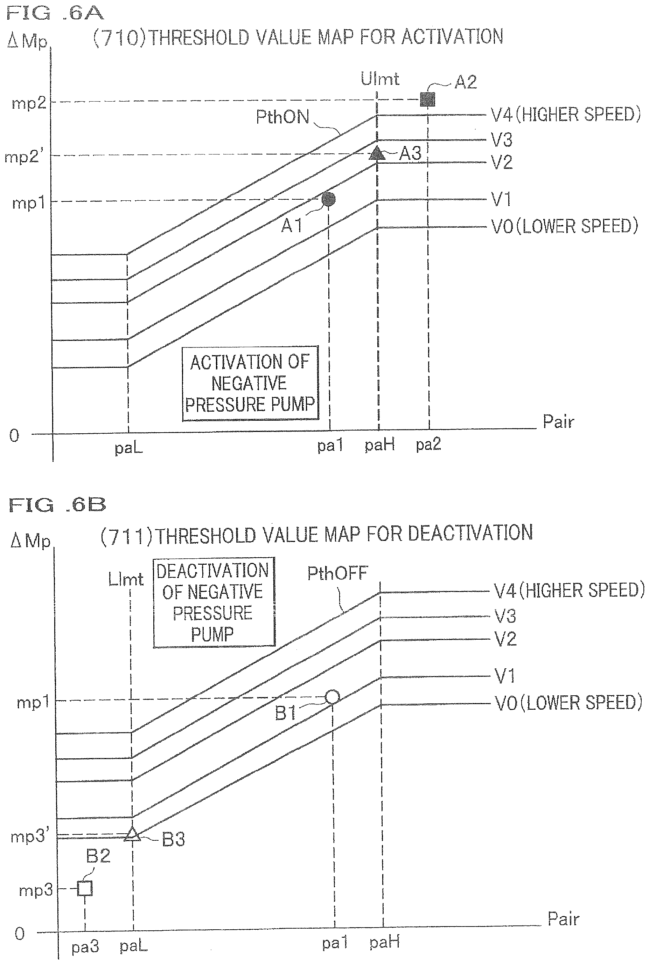

FIG. 6A is a chart showing the upper limit value of the calculated value of atmospheric pressure, and FIG. 6B is a chart showing the lower limit value of the calculated value of atmospheric pressure.

For example, as shown in FIG. 6A, the calculating unit for relative pressure 70 (see FIG. 3) sets the upper limit value Ulmt of the calculated value of atmospheric pressure Pa0 to "paH". That is, the high-pressure boundary value "paH" is set as the upper limit value Ulmt. In this case, when the value of atmospheric pressure Pa0 calculated based on the detected signal of atmospheric pressure P4 is "pa2 (pa2 > paH)", the calculating unit for relative pressure 70 (see FIG. 3) in the ECU 7 sets the calculated value of atmospheric pressure Pa0 to "paH". This changes the relative pressure ΔMp to "mp2' (mp2' > mp2)" (shown as a black triangle A3 in FIG. 6A). In this case, when the vehicle speed is at V3, V4, the activation determining unit 72a (see FIG. 3) in the ECU 7 determines to activate the negative pressure pump 8 (see FIG. 1) and sets the pump activating signal SigP to be ON.

When the atmospheric pressure Pₐᵢᵣ is "pa1" and the relative pressure ΔMp is "mp1" under a situation where the vehicle 100 (see FIG. 1) is traveling, if the atmospheric pressure sensor 9 (see FIG. 1) is not out of order and the vehicle speed is at V2 to V4, the negative pressure pump 8 (see FIG. 1) is activated (black circle A1).

If the atmospheric pressure sensor 9 fails and the calculated value of atmospheric pressure Pa0 is changed to "pa2 (pa2 > paH)", the relative pressure ΔMp is changed to "mp2", by which the negative pressure pump 8 is not activated when the vehicle speed is at V0 to V4 (black square A2). By providing the upper limit value Ulmt as the calculated value of atmospheric pressure Pa0, the negative pressure pump 8 is activated (black triangle A3) when the vehicle speed is at V3, V4 even if the atmospheric pressure sensor 9 fails.

Thus, even in a state where the negative pressure pump 8 (see FIG. 1) that is preferably activated is not actually activated due to the failure of the atmospheric pressure sensor 9 (see FIG. 1), setting the upper limit value Ulmt to the calculated value of atmospheric pressure Pa0 allows the negative pressure pump 8 to be activated when the vehicle speed is at V3, V4.

It should be noted that the upper limit value Ulmt of the calculated value of atmospheric pressure Pa0 may be set to a value different from the high-pressure boundary value "paH". That is, the high-pressure boundary value "paH" is not limited to the upper limit value Ulmt.

Further, as shown in FIG. 6B, the calculating unit for relative pressure 70 (see FIG. 3) sets the lower limit value Llmt of the calculated value of atmospheric pressure Pa0 to "paL". That is, the low-pressure boundary value "paL" is set to the lower limit value Llmt. In this case, when the value of atmospheric pressure Pa0 calculated based on the detected signal of atmospheric pressure P4 is "pa3 (pa3 < paL)", the calculating unit for relative pressure 70 (see FIG. 3) in the ECU 7 sets the calculated value of atmospheric pressure Pa0 to "paL". Accordingly, the relative pressure ΔMp is changed to "mp3' (mp3' < mp3)" (shown with a white triangle B3 in FIG. 6B). In this case, the deactivation determining unit 72b (see FIG. 3) in the ECU 7 determines to deactivate the negative pressure pump 8 (see FIG. 1) when the vehicle speed is V0 and sets the pump activating signal SigP to be OFF.

When the atmospheric pressure Pₐᵢᵣ is "pa1" and the relative pressure ΔMp is "mp1" under a situation where the vehicle 100 (see FIG. 1) is traveling, if the atmospheric pressure sensor 9 (see FIG. 1) is not out of order, the negative pressure pump 8 (see FIG. 1) is deactivated when the vehicle speed is V0, V1 (white circle A1).

If the atmospheric pressure sensor 9 fails and the calculated value of atmospheric pressure Pa0 becomes "pa3 (pa3 < pa1)", the relative pressure ΔMp is changed to "mp3", which does not deactivate the negative pressure pump 8 when the vehicle speed is at V0 to V4 (white square B2). With the lower limit value Llmt for the calculated value of atmospheric pressure Pa0, the negative pressure pump 8 is deactivated when the vehicle speed is V0 even if the atmospheric pressure sensor 9 fails (white triangle B3).

Thus, even in a state where the negative pressure pump 8 (see FIG. 1) that is preferably deactivated is not actually deactivated due to the failure of the atmospheric pressure sensor 9 (see FIG. 1), the negative pressure pump 8 can be deactivated when the vehicle speed is V0 by setting the lower limit value Llmt for the calculated value of atmospheric pressure Pa0.

It should be noted that the lower limit value Llmt for the calculated value of atmospheric pressure Pa0 may be set to a value different from the low-pressure boundary value "paL". That is, the lower limit value Llmt is not limited to the low-pressure boundary value "paL".

As described above, the ECU 7 (see FIG. 1) of the present embodiment sets the limit values (upper limit value Ulmt, lower limit value Llmt) for the calculated value of atmospheric pressure Pa0, the value of atmospheric pressure Pa0 being calculated based on the detected signal of atmospheric pressure P4 that is inputted from the atmospheric pressure sensor 9 (see FIG. 1).

This allows the negative pressure pump 8 (see FIG. 1) to be controlled as optimally as possible even if the atmospheric pressure sensor 9 fails.

As exemplified in FIG. 6A, when the vehicle speed is at V2 to V4 and the negative pressure pump 8 (see FIG. 1) is in a condition to be preferably activated (black circle A1), if the atmospheric pressure sensor 9 (see FIG. 1) fails, the negative pressure pump 8 will be determined to be in a condition not to be activated (black square A2). However, since the upper limit value Ulmt is set for the calculated value of atmospheric pressure Pa0, the negative pressure pump 8 is activated when the vehicle speed is V3, V4 (black triange A3).

In other words, if the atmospheric pressure sensor 9 fails, the negative pressure pump 8 is not activated at the vehicle speed (V2) at which the negative pressure pump 8 is preferably activated, but the negative pressure pump 8 is activated when the vehicle speed is V3, V4. Therefore, the negative pressure pump 8 is controlled as optimally as possible even if the atmospheric pressure sensor 9 fails, which mitigates negative effects due to the failure of the atmospheric pressure sensor 9.

Further, as exemplified in FIG. 6B, when the vehicle speed is at V0, V1 and the negative pressure pump 8 (see FIG. 1) is in a condition to be preferably deactivated (white circle B1), if the atmospheric pressure sensor 9 (see FIG. 1) fails, the negative pressure pump 8 will be determined to be in a condition not to be deactivated (white square B2). However, since the lower limit value Llmt is set for the calculated value of atmospheric pressure Pa0, the negative pressure pump 8 is deactivated when the vehicle speed is V0 (white triangle B3).

In other words, if the atmospheric pressure sensor 9 fails, the negative pressure pump 8 is not deactivated at the vehicle speed (V1) at which the negative pressure pump 8 is preferably deactivated, but the negative pressure pump 8 is deactivated when the vehicle speed is V0. Therefore, the negative pressure pump 8 is controlled as optimally as possible even if the atmospheric pressure sensor 9 fails, which mitigates negative effects due to the failure of the atmospheric pressure sensor 9.

It should be noted that design of the present invention can be changed properly without departing from the spirit of the invention.

For example, the upper limit value Ulmt and lower limit value Llmt for the calculated value of atmospheric pressure Pa0 can be changed properly according to a condition where the vehicle 100 (see FIG. 1) travels.

As an example, if the highest altitude where the vehicle 100 travels (highest peak altitude where the vehicle 100 travels) is around 3000 m, the lower limit of the atmospheric pressure in the condition where the vehicle 100 travels is around "700 hPa (525 mmHg)". Therefore, the lower limit value Llmt may be set to "700 hPa (525 mmHg)" (Llmt = 700 hPa).

Further, for example, if the lowest altitude where the vehicle 100 (see FIG. 1) travels (lowest peak altitude where the vehicle 100 travels) is around 1500 m, the upper limit of the atmospheric pressure in the condition where the vehicle 100 travels is around "850 hPa (640 mmHg)". Therefore, the upper limit value Ulmt may be set to "850 hPa (640 mmHg)" (Ulmt = 850 hPa). On the contrary, if the highest altitude where the vehicle 100 travels is around 1500 m, the lower limit of the atmospheric pressure in the condition where the vehicle 100 travels is around "850 hPa (640 mmHg)". Therefore, the lower limit value Llmt may be set to "850 hPa (640 mmHg)" (Llmt = 850 hPa).

Thus, the upper limit value Ulmt may be set in response to the lowest altitude where the vehicle 100 travels and the lower limit value Llmt may be set in response to the highest altitude where the vehicle 100 is driven. For example, when a switch or switches (not shown) for changing the upper limit value Ulmt and the lower limit value Llmt is/are arranged, the upper limit value Ulmt and lower limit value Llmt can be easily set/changed.

It should be noted that the upper limit value Ulmt and lower limit value Llmt may be set based on the highest altitude and lowest altitude in countries where the vehicle 100 (see FIG. 1) may likely travel, or based on the highest altitude and lowest altitude on the earth.

Further, the ECU 7 (see FIG. 1) may be configured to set the upper limit value Ulmt and lower limit value Llmt as the calculated value of atmospheric pressure Pa0 when the atmospheric pressure sensor 9 (see FIG. 1) is determined to be out of order.

For example, if the ECU 7 is configured to be capable of obtaining altitude information from a navigation system (not shown) or the like, the ECU 7 can calculate standard atmospheric pressure Pₐᵢᵣ based on the obtained altitude information. In this case, the ECU 7 may be configured to determine that the atmospheric pressure sensor 9 is out of order when a deviation between the value of atmospheric pressure Pa0 calculated based on the detected signal of atmospheric pressure P4 and the standard atmospheric pressure Pₐᵢᵣ calculated based on the altitude information is greater than or equal to a predetermined threshold value. Additionally, the ECU 7 may be configured to set the upper limit value Ulmt and lower limit value Llmt as the calculated value of atmospheric pressure Pa0 when determining that the atmospheric pressure sensor 9 is out of order.

Further, the ECU 7 may be configured to warn a driver when the atmospheric pressure sensor 9 is determined to be out of order. For example, the driver may be warned by a warning lamp or a warning sound.

Still further, the ECU 7 may be configured to set only one of the upper limit value Ulmt or the lower limit value Llmt for the calculated value of atmospheric pressure Pa0.

Still further, the master power pressure sensor 2a (see FIG. 1) may be a relative pressure sensor. The ECU 7 may be configured such that the ECU 7 calculates the master power pressure based on the detected signal from the master power pressure sensor 2a (relative pressure sensor) to determine the activation/deactivation of the negative pressure pump 8 (see FIG. 1) based on the calculated master power pressure as a determination value.
For example, the ECU 7 may be configured to determine to activate the negative pressure pump 8 when the calculated master power pressure (determination value) is smaller negative pressure than the activation threshold value, and to determine to deactivate the negative pressure pump 8 when the calculated master power pressure (determination value) is larger negative pressure than the deactivation threshold value. A vehicle brake system including: an atmospheric pressure sensor; a negative pressure booster; a negative pressure pump; a master power pressure sensor that detects booster pressure; an activation determining unit that compares an activation threshold value PthON that has larger negative pressure as the atmospheric pressure increases with a determination value calculated based on the booster pressure to determine activation of the negative pressure pump; and a deactivation determining unit that compares a deactivation threshold value PthOFF that has larger negative pressure as the atmospheric pressure increases with the determination value to determine deactivation of the negative pressure pump, wherein the activation threshold value PthON is set to have maximum negative pressure of activation which negative pressure is for a high-pressure boundary value paH of the atmospheric pressure, and the deactivation threshold value PthOFF is set to have minimum negative pressure of deactivation which negative pressure is for a low-pressure boundary value paL of the atmospheric pressure.

## Claims

1. A vehicle brake system installed in a vehicle comprising:
an atmospheric pressure detecting device (9) that detects atmospheric pressure to output a detected signal of atmospheric pressure (Pₐᵢᵣ);
a negative pressure booster (2) that uses negative pressure to boost a brake operation force inputted via a brake operation mechanism (4);
a negative pressure generating device (8) that supplies the negative pressure to the negative pressure booster (2);
a booster pressure detecting device (2a) that detects booster pressure (Mp0) generated in the negative pressure booster (2) to output a detected signal of booster pressure;
an activation determining unit (72a) that compares a predetermined activation threshold value (PthON) to be set to have larger negative pressure as the atmospheric pressure (Pₐᵢᵣ) increases with a determination value calculated based on the detected signal of booster pressure (P1) to determine activation of the negative pressure generating device (8); and
a deactivation determining unit (72b) that compares a predetermined deactivation threshold value (PthOFF) to be set to have larger negative pressure as the atmospheric pressure (Pa0) increases with the determination value to determine deactivation of the negative pressure generating device (8), **characterized in that** the activation threshold value (PthON) has a maximum value of negative pressure detected by the booster pressure detecting device (2a) in a region where the atmospheric pressure (Pₐᵢᵣ) is greater than or equal to a predetermined high-pressure boundary value (paH), and the activation threshold value (PthON) has a minimum value of negative pressure detected by the booster pressure detecting device (2a) in a region where the atmospheric pressure (Pₐᵢᵣ) is less than or equal to a predetermined low-pressure boundary value (paL).

2. The vehicle brake system according to claim 1,
wherein the atmospheric pressure detecting device (9) and the booster pressure detecting device (2a) are sensors that detect absolute pressure, and the vehicle brake system further comprises
a calculating unit (70) for relative pressure (ΔMp) that calculates a value of booster pressure (P1) based on the detected signal of booster pressure (Mp0), calculates a value of atmospheric pressure (Pa0) based on the detected signal of atmospheric pressure (Pₐᵢᵣ), and subtracts the calculated value of atmospheric pressure (Pₐᵢᵣ) from the calculated value of booster pressure (Mp0) to calculate relative pressure of the calculated value of the booster pressure (Mp0),
wherein the activation determining unit (72a) determines the activation of the negative pressure generating device (8) based on the relative pressure (ΔMp) as the determination value, and
the deactivation determining unit (72b) determines the deactivation of the negative pressure generating device (8) based on the relative pressure (ΔMp) as the determination value.

3. The vehicle brake system according to claim 2,
wherein the activation determining unit (72a) determines to activate the negative pressure generating device (8) when the relative pressure (ΔMp) has negative pressure smaller than the activation threshold value (PthON), and
the deactivation determining unit (72a) determines to deactivate the negative pressure generating device (8) when the relative pressure has negative pressure larger than the deactivation threshold value (PthOFF).

4. The vehicle brake system according to claim 2 or 3,
wherein the calculating unit (70) for relative pressure (ΔMp) calculates the relative pressure (ΔMp) by subtracting a predetermined upper limit value (Uₗₘₜ) from the calculated value of booster pressure (Mp0) when the calculated value of atmospheric pressure (Pₐᵢᵣ) is greater than or equal to the upper limit value (Uₗₘₜ), and calculates the relative pressure (ΔMp) by subtracting a predetermined lower limit value (Lₗₘₜ) from the calculated value of booster pressure when the calculated value of atmospheric pressure is less than or equal to the lower limit value (Lₗₘₜ).

5. The vehicle brake system according to claim 4,
wherein the upper limit value (Uₗₘₜ)is set based on the lowest altitude where the vehicle travels and the lower limit value (Lₗₘₜ) is set based on the highest altitude where the vehicle travels.

## Patentansprüche

1. In einem Fahrzeug angebrachtes Fahrzeugbremssystem, welches aufweist:
eine Atmosphärendruck-Erfassungseinrichtung (9), die einen Atmosphärendruck erfasst, um ein erfasstes Signal des Atmosphärendrucks (Pₐᵢᵣ) auszugeben;
einen Unterdruckverstärker (2), der Unterdruck nutzt, um eine über einen Bremsbetätigungsmechanismus (4) eingegebene Bremsbetätigungskraft zu verstärken;
eine Unterdruck-Erzeugungsvorrichtung (8), die den Unterdruck dem Unterdruckverstärker (2) zuführt;
eine Verstärkerdruck-Erfassungsvorrichtung (2a), die einen im Unterdruckverstärker (2) erzeugten Verstärkerdruck (Mp0) erfasst, um ein erfasstes Signal des Verstärkerdrucks auszugeben;
eine Aktivierungs-Bestimmungseinheit (72a), die einen vorbestimmten Aktivierungsschwellenwert (PthON), der auf einen größeren Unterdruck zu setzen ist, wenn der Atmosphärendruck (Pₐᵢᵣ) ansteigt, mit einem Bestimmungsschwellenwert, der basierend auf dem erfassten Signal des Verstärkerdrucks (P1) berechnet wird, vergleicht, um eine Aktivierung der Unterdruck-Erzeugungsvorrichtung (8) zu bestimmen; und
eine Deaktivierungsbestimmungseinheit (72b), die einen vorbestimmten Deaktivierungsschwellenwert (PthOFF), der auf einen größeren Unterdruck zu setzen ist, wenn der Atmosphärendruck (Pa0) zunimmt, mit dem Bestimmungsschwellenwert vergleicht, um eine Deaktivierung der Unterdruck-Erzeugungsvorrichtung (8) zu bestimmen,
**dadurch gekennzeichnet, dass**
der Aktivierungsschwellenwert (PthON) einen Maximalwert des von der Verstärkerdruck-Erfassungsvorrichtung (2a) erfassten Unterdrucks in einem Bereich hat, wo der Atmosphärendruck (Pₐᵢᵣ) größer als oder gleich einem vorbestimmten Hochdruckgrenzwert (paH) ist, und der Aktivierungsschwellenwert (PthON) einen Minimalwert des von der Verstärkerdruck-Erfassungsvorrichtung (2a) erfassten Unterdrucks in einem Bereich hat, wo der Atmosphärendruck (Pₐᵢᵣ) niedriger als oder gleich einem vorbestimmten Niederdruckgrenzwert (paL) ist.

2. Das Fahrzeugbremssystem nach Anspruch 1,
wobei die Atmosphärendruck-Erfassungsvorrichtung (9) und die Verstärkerdruck-Erfassungsvorrichtung (2a) Sensoren sind, die AbsolutDruck erfassen, und das Fahrzeugbremssystem ferner aufweist:
eine Berechnungseinheit (70) für relativen Druck (ΔMp), die einen Wert des Verstärkerdrucks (P1) basierend auf dem erfassten Signal des Verstärkerdrucks (Mp0) berechnet, einen Wert des Atmosphärendrucks (Pa0) basierend auf dem erfassten Signal des Atmosphärendrucks (Pₐᵢᵣ) berechnet, und den berechneten Wert des Atmosphärendrucks (Pₐᵢᵣ) von dem berechneten Wert des Verstärkerdrucks (Mp0) so subtrahiert, um einen relativen Druck des berechneten Werts des Verstärkerdrucks (Mp0) zu berechnen,
wobei die Aktivierungsbestimmungseinheit (72a) die Aktivierung der Unterdruck-Erzeugungsvorrichtung (8) basierend auf relativem Druck (ΔMp) als dem Bestimmungswert bestimmt, und
die Deaktivierungsbestimmungseinheit (72b) die Deaktivierung der Unterdruck-Erzeugungsvorrichtung (8) basierend auf dem relativen Druck (ΔMp) als dem Bestimmungswert bestimmt.

3. Das Fahrzeugbremssystem nach Anspruch 2,
wobei die Aktivierungsbestimmungseinheit (72a) bestimmt, die Unterdruck-Erzeugungsvorrichtung (8) zu aktivieren, wenn der relative Druck (ΔMp) einen Unterdruck hat, der kleiner als der Aktivierungsschwellenwert (PthON) ist, und
die Deaktivierungsbestimmungseinheit (72a) bestimmt, die Unterdruck-Erzeugungsvorrichtung (8) zu deaktivieren, wenn der relative Druck einen Unterdruck hat, der größer als der Deaktivierungsschwellenwert (PthOFF) ist.

4. Das Fahrzeugbremssystem nach Anspruch 2 oder 3,
wobei die Berechnungseinheit (70) für relativen Druck (ΔMp) den relativen Druck (ΔMp) berechnet, indem sie einen vorbestimmten oberen Grenzwert (Uₗₘₜ) von dem berechneten Wert des Verstärkerdrucks (Mp0) subtrahiert, wenn der berechnete Wert des Atmosphärendrucks (Pₐᵢᵣ) größer als oder gleich dem oberen Grenzwert (Uₗₘₜ) ist, und den relativen Druck (ΔMp) berechnet, indem sie einen vorbestimmten unteren Grenzwert (Lₗₘₜ) von dem berechneten Wert des Verstärkerdrucks subtrahiert, wenn der berechnete Wert des Atmosphärendrucks kleiner als oder gleich dem unteren Grenzwert (Lₗₘₜ) ist.

5. Das Fahrzeugbremssystem nach Anspruch 4,
wobei der obere Grenzwert (Uₗₘₜ) basierend auf der niedrigsten Höhenlage gesetzt wird, wo das Fahrzeug fährt, und der untere Grenzwert (Lₗₘₜ) basierend auf der höchsten Höhenlage gesetzt wird, wo das Fahrzeug fährt.

## Revendications

1. Système de freinage de véhicule, installé dans un véhicule, comprenant :
un dispositif de détection de pression atmosphérique (9) qui détecte une pression atmosphérique pour délivrer un signal de détection de pression atmosphérique (Pₐᵢᵣ) ;
un amplificateur à dépression (2) qui utilise une pression négative pour amplifier une force d'actionnement de frein appliquée par l'intermédiaire d'un mécanisme d'actionnement de frein (4) ;
un dispositif générateur de pression négative (8) qui fournit la pression négative à l'amplificateur à dépression (2) ;
un dispositif de détection de pression d'amplificateur (2a) qui détecte la pression d'amplificateur (Mp0) produite dans l'amplificateur à dépression (2) pour délivrer un signal de détection de pression d'amplificateur ;
une unité de détermination d'activation (72a) qui compare une valeur prédéterminée de seuil d'activation (PthON) à régler pour obtenir une pression négative plus forte à mesure que la pression atmosphérique (Pₐᵢᵣ) augmente, avec une valeur de détermination calculée sur la base du signal de détection de pression d'amplificateur (P1) pour décider de l'activation du dispositif générateur de pression négative (8) ; et
une unité de détermination de désactivation (72b) qui compare une valeur prédéterminée de seuil de désactivation (PthOFF) à régler pour obtenir une pression négative plus forte à mesure que la pression atmosphérique (Pa0) augmente, avec la valeur de détermination pour décider de la désactivation du dispositif générateur de pression négative (8),
**caractérisé en ce que** :
la valeur de seuil d'activation (PthON) a une valeur maximale de pression négative détectée par le dispositif de détection de pression d'amplificateur (2a) dans une zone où la pression atmosphérique (Pₐᵢᵣ) est supérieure ou égale à une valeur limite prédéterminée de haute pression (paH), et la valeur de seuil d'activation (PthON) a une valeur minimale de pression négative détectée par le dispositif de détection de pression d'amplificateur (2a) dans une zone où la pression atmosphérique (Pₐᵢᵣ) est inférieure ou égale à une valeur limite prédéterminée de basse pression (paL).

2. Système de freinage de véhicule selon la revendication 1,
dans lequel le dispositif de détection de pression atmosphérique (9) et le dispositif de détection de pression d'amplificateur (2a) sont des capteurs qui détectent une pression absolue, et le système de freinage de véhicule comprend en outre :
une unité de calcul (70) de pression relative (ΔMp) qui calcule une valeur de pression d'amplificateur (P1) sur la base du signal de détection de pression d'amplificateur (Mp0), calcule une valeur de pression atmosphérique (Pa0) sur la base du signal de détection de pression atmosphérique (Pₐᵢᵣ), et soustrait la valeur calculée de pression atmosphérique (Pₐᵢᵣ) de la valeur calculée de pression d'amplificateur (Mp0) pour calculer une pression relative de la valeur calculée de la pression d'amplificateur (Mp0),
dans lequel l'unité de détermination d'activation (72a) décide de l'activation du dispositif générateur de pression négative (8) sur la base de la pression relative (ΔMp) en tant que valeur de détermination, et
l'unité de détermination de désactivation (72b) décide de la désactivation du dispositif générateur de pression négative (8) sur la base de la pression relative (ΔMp) en tant que valeur de détermination.

3. Système de freinage de véhicule selon la revendication 2,
dans lequel l'unité de détermination d'activation (72a) décide d'activer le dispositif générateur de pression négative (8) lorsque la pression relative (ΔMp) a une pression négative inférieure à la valeur de seuil d'activation (PthON), et
l'unité de détermination de désactivation (72a) décide de désactiver le dispositif générateur de pression négative (8) lorsque la pression relative a une pression négative supérieure à la valeur de seuil de désactivation (PthOFF).

4. Système de freinage de véhicule selon la revendication 2 ou 3,
dans lequel l'unité de calcul (70) de pression relative (ΔMp) calcule la pression relative (ΔMp) en soustrayant une valeur limite supérieure prédéterminée (Uₗₘₜ) de la valeur calculée de pression d'amplificateur (Mp0), lorsque la valeur calculée de pression atmosphérique (Pₐᵢᵣ) est supérieure ou égale à la valeur limite supérieure (Uₗₘₜ), et calcule la pression relative (ΔMp) en soustrayant une valeur limite inférieure prédéterminée (Lₗₘₜ) de la valeur calculée de pression d'amplificateur, lorsque la valeur calculée de pression atmosphérique est inférieure ou égale à la valeur limite inférieure (Lₗₘₜ).

5. Système de freinage de véhicule selon la revendication 4,
dans lequel la valeur limite supérieure (Uₗₘₜ) est réglée sur la base de l'altitude la plus basse à laquelle le véhicule circule et la valeur limite inférieure (Lₗₘₜ) est réglée sur la base de l'altitude la plus haute à laquelle le véhicule circule.
